# EUROPEAN PATENT SPECIFICATION

(11) **EP 2 367 875 B1**
(45) Date of publication and mention of the grant of the patent: **17.08.2016**
(21) Application number: 09778911.9
(22) Date of filing: 17.12.2009
(51) Int. Cl.: C08K 5/00, C08K 5/13, C08K 5/527

(54) **POLYOLEFIN COMPOSITION FOR WATER PIPES WITH IMPROVED CHLORINE RESISTANCE**
POLYOLEFINZUSAMMENSETZUNG FÜR WASSERROHRE MIT VERBESSERTER CHLORBESTÄNDIGKEIT
COMPOSITION DE POLYOLÉFINE POUR DES CONDUITES D'EAU AYANT UNE RÉSISTANCE AU CHLORE AMÉLIORÉE

(30) Priority: 22.12.2008 EP 08022279
(43) Date of publication of application: 28.09.2011
(73) Proprietor: Borealis AG, 1220 Vienna (AT)
(72) Inventor: ANKER, Martin, S-425 43 Hisings Kärra (SE); JAMTVEDT, Svein, N-3960 Stathelle (NO)
(74) Representative: Kador & Partner
(86) International application number: PCT/EP2009/009093
(87) International publication number: WO 2010/072372

(56) References cited:
- EP-A- 0 124 664
- EP-A- 1 253 169
- EP-A1- 1 911 798
- WO-A-2004/090032
- WO-A-2005/056657

## Description

The present invention relates to a polyolefin composition for water pipes with improved resistance to chlorinated water, particularly to the use of a combination of particular types of antioxidants used in such compositions for achieving this favourable effect.

Recent progresses in the manufacturing and processing of polymers have led to the application of plastics in virtually every aspect of modern day life. However, polymeric compounds are prone to aging under the effects of oxidants, light and heat. This results in a loss of lifetime such as loss of strength, stiffness and flexibility, discoloration and scratching as well as loss of gloss.

It is well-known in the art that antioxidants and light stabilizers can prevent or at least reduce these effects. Several types of additives are added to polymers to protect them during processing and to achieve the desired end-use properties. Additives are generally divided in stabilizers and modifiers. Stabilizers, like antioxidants, traditionally and currently used comprise sterically hindered phenolics, aromatic amines, hindered amine stabilizers, organo-phosphites/phosphonites and thioethers. However, appropriate combinations of stabilizers have to be carefully selected, depending on the desired final properties, the polymeric article should have.

Besides many other applications, polyolefins are used for the preparation of pipes for drinking water distribution systems. In many cases chlorine is added to the water. Hence, chlorinated water is in permanent contact with the pipe material. Due to the permanent contact to the inner pipe surface, deterioration of the polyolefin composition is caused.

EP 124 664 discloses Poly-1-butene resin compositions suitable for pipes comprising at least one particular hindered phenol antioxidant for achievement of resistance against chlorinated water. Said compositions preferably comprise at least one further antioxidant selected from the group tocopherol, 2,6-di-tert-butyl-p-cresol and tris(2,4-di-tert-butylphenyl)phosphite.

WO 2005/056657 discloses stabilized polyethylene materials suitable for pipes with advantageously balanced thermal, mechanical and processing properties which are maintained in chlorinated water environments. The polyethylene compositions comprise members of two different classes of hindered phenolic antioxidants and preferably further antioxidants as phosphites and phosphonites such as tris(2,4-di-tert-butylphenyl)phosphate.

EP 1 253 169 discloses a degradation inhibitor for a resin material and a resin composition which is resistant against chlorinated water. The degradation inhibitor is a 1,1,3-trisubstituted butane and may further comprise a phosphorus antioxidant and a phenolic antioxidant.

WO 2004/090032 discloses polyolefin tubes which are resistant to chlorinated water. The tubes are made from a silane cross-linked polyolefin composition comprising a polyolefin and a stabilizer mixture comprising a high-molecular phenolic constituent, a sulfur-containing constituent, a phosphorus-containing constituent and a metal deactivator.

WO 2006/119935 discloses polyolefinic molding compositions having improved resistance to thermooxidative degradation suitable for pipes. The compositions comprise a thermoplastic polyolefin, an organic polyoxy or polyhydroxy compound and further additives such as phenolic antioxidants.

JP 2265939 discloses polyolefin compositions comprising a polyolefin, a phenolic stabilizer without an ester bond in the molecule and a sulphur-containing stabilizer without an ester bond in the molecule. The compositions have good resistance to chlorinated water and are suitable for water pipes.

WO 03/064511 discloses different types of antioxidants for increasing the lifetime of a polyolefin pipe which is in permanent contact with chlorinated water, namely an epoxidized fatty acid or ester thereof and/or an organotin compound.

However, there is still a need for improved polyolefin compositions suitable for water pipe applications, particularly for polyolefin compositions having an increased lifetime in contact to chlorinated water.

Thus, it is an object of the present invention to provide a particular type of additive for addition to polyolefin compositions for pipes which additive helps to increase the lifetime of a polyolefin pipe which is in permanent contact with chlorinated water.

The present invention is based on the finding that the object of the invention can be achieved, if the polyolefin composition comprises a specific type of additives.

Therefore, the present invention relates to the use of compound (A) and compound (B) in a polyolefin composition for increasing the lifetime of a pipe made of said polyolefin composition which pipe is in permanent contact with chlorinated water, wherein compound (A) has the following formula (I): 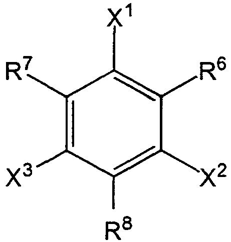 wherein
- R⁶, R⁷ and R⁸ independently are non-substituted or substituted aliphatic or aromatic hydrocarbyl radicals which may comprise OH-groups,
- X¹, X², and X³ independently are H or OH, with the proviso that at least one of X¹, X² and X³ is OH, and
- the entire molecule does not comprise an ester group, wherein compound (B) has the following formula (II): 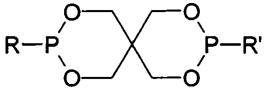
wherein R and R' each is the same or different residue and comprising at least 6 carbon atoms.

In compound (A) according to formula (I) residues R⁶, R⁷ and R⁸ independently are non-substituted or substituted aliphatic or aromatic hydrocarbyl radicals which may comprise OH-groups. This means that apart from OH-groups no further heteroatoms are present in R⁶, R⁷ and R⁸, so that phenolic stabilizer (A) is e.g. free of ester groups, amide groups and groups containing phosphorus.

Preferably, R⁶, R⁷ and R⁸, which independently are non-substituted or substituted aliphatic or aromatic, more preferably aliphatic, hydrocarbyl radicals which may comprise OH-groups, have from 2 to 200 carbon atoms.

Preferably, R⁶ and R⁷ independently have from 2 to 20 carbon atoms, more preferably from 3 to 10 carbon atoms.

Furthermore, it is preferred that R⁶ and/or R⁷, more preferably R⁶ and R⁷, are aliphatic hydrocarbyl groups with at least 3 carbon atoms which have a branch at the second carbon atom, and most preferably R⁶ and/or R⁷, more preferably R⁶ and R⁷, are tert. butyl groups.

Preferably, R⁸ has from 20 to 100 carbon atoms, more preferably has from 30 to 70 carbon atoms.

Furthermore, it is preferred that R⁸ includes one or more phenyl residues.

Still further, it is preferred that R⁸ includes one or more hydroxyphenyl residues.

In a still more preferred embodiment, R⁸ is a 2,4,6-tri-methyl-3,5-di-(3,5,-di-tert. butyl-4-hydroxyphenyl) benzene residue.

Preferably, in compound (A) of formula (I) X¹ is OH, and most preferably X¹ is OH and X² and X³ are H.

In a particular preferred embodiment compound (A) comprises, still more preferable consists of 1,3,5-Tri-methyl-2,4,6-tris-(3,5-di-tert. butyl-4-hydroxyphenyl) benzene (Irganox 1330).

In formula (II) of compound (B) usually R and R' do not comprise more than 100 carbon atoms each.

Preferably, in formula (II) R and/or R' is R"-O-, the oxygen atom being connected to the phosphorus atom of formula (II). Preferably, R" comprises at least 6 carbon atoms, more preferably at least 16 carbon atoms. Usually, R and R' do not comprise more than 100 carbon atoms each.

Preferably, R, R' and/or R" comprise at least one aryl group each, still more preferably at least two aryl groups each. R, R' and/or R" will usually comprise not more than 10 aryl groups each.

According to a particular preferred embodiment R and R' is R"-O-, the oxygen atom being connected to the phosphorus atom of formula (II), and R" comprises at least two aryl groups.

Preferably, compound (B) is neither bis(2,4-di-tert-butylphenyl)pentaerythritol diphosphite nor bis(2,6-di-tert-butyl-4-methylphenyl)pentaerythritol diphosphite.

In a particular preferred embodiment compound (B) comprises, still more preferable consists of bis(2,4-dicumylphenyl) pentaerythriol diphosphite.

Preferably, the concentration of compound (A) in the polyolefin composition is at least 100 ppm, more preferably at least 250 ppm, still more preferred at least 500 ppm.

Preferably, the concentration of compound (A) in the polyolefin composition is 5000 ppm or less, more preferably 3000 ppm or less, still more preferred 1500 ppm or less.

Preferably, the concentration of compound (B) in the polyolefin composition is at least 200 ppm, more preferably at least 300 ppm.

Preferably, the concentration of compound (B) in the polyolefin composition is 1000 ppm or less, more preferably 800 ppm or less.

Preferably, the sum of concentration of compounds (A) and (B) is between 1000 and 2500 ppm, more preferably between 1300 and 2200 ppm.

In a preferred embodiment of the present invention only one compound of formula (I) is used, still preferably only one compound of formula (I) together with only one compound of formula (II).

The polyolefin composition may be any polyolefin composition which is suitable for pipe applications, preferably such polyolefin compositions which can be extruded into pipes.

Still further, it is preferred that the polyolefin composition comprises a polyethylene homo- or copolymer, more preferably that the polyolefin part of said polyolefin composition (so-called base resin) consists of a polyethylene homo- or copolymer.

The base resin of said polyolefin composition may be any polyolefin homo- or copolymer, preferably a homo- or copolymer of ethylene, still more preferably a homo- or copolymer of ethylene wherein the comonomers are alpha-olefins having between 3 and 20 carbon atoms.

The base resin has a density of preferably between 925 to 965 kg/m³. Still further, the base resin preferably has an MFR₅ of between 0.05 to 5 g/10 min.

In addition to the inventive compounds (A) and (B) the polyolefin composition may comprise further additives, i.e. stabilizers and modifiers. Typical stabilizers are antioxidants, typical modifiers are anti-static and anti-fogging agents, acid scavengers, blowing agents, lubricants, nucleating agents, slip and anti-blocking agents, as well as fillers, flame retardants and cross-linkers. The polyolefin composition may also comprise pigments.

### Measurement methods

### a) lifetime of pipes

The general testing conditions followed ASTM F 2263.

The pipes had an outer diameter of 12 mm, a wall thickness of 2 mm and a length of 250 mm. The pipes contained chlorinated water wherein the average chlorine level was 3.94 ppm (standard deviation 0.06 ppm) and the average pH value was 6.81 (standard deviation 0.05). The average oxygen reduction potential (ORP) was 888 mV (standard deviation 9.7 mV). The chlorine source was sodium hypochlorite. The chlorinated water was allowed to circulate through each of the tested pipes at a temperature of 90 °C at a flow rate of 23 dm³/h (0.13 m/s). The internal pressure was 6.8 bar. The conditioning time was 1 hour.

### b) Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190 °C and may be determined at different loadings such as 2.16 kg (MFR₂) or 21.6 kg (MFR₂₁).

### c) Density

The density was measured according to ISO 1183. The sample preparation was made according to ISO 1872/2B.

### Examples

The compositions prepared for examples 1 to 4 are shown in Table 1. The values are given in weight percent, in case of the antioxidants in ppm.

The base resin used is an ethylene copolymer having an MFR₅ of 0.22g/10min, an MFR₂₁ of 7.8g/10min and a density of 948 kg/m³. It was produced in a continuous polymerisation process involving a step of pre-polymerisation (ethylene homopolymer, split 2), followed by a polymerisation step in a loop reactor (ethylene homopolymer, split 46) and followed by a polymerisation step in a gas phase reactor (ethylene copolymer, 1-butene/ethylene = 90 mol/kmol, split 52). The catalyst used was a Ziegler-Natta catalyst. The resulting composition was extruded resulting in the base resin with the properties given above.

All compositions contained carbon black provided in a masterbatch (MB). The carbon black master batch contained 39 wt% carbon black and
61 wt% high density polyethylene.

Irgafos 168 is Tris(2,4-di-t-butylphenyl)phosphite (CAS-no. 31570-04-4).

Doverphos S-9228 is Bis(2,4-dicumylphenyl) pentaerythriol diphosphite (CAS-no. 154862-43-8).

Irganox 1010 is Pentaerythrityl-tetrakis(3-(3,5-di-tert. butyl-4-hydroxy-phenyl)-propionate (CAS-no. 6683-19-8).

Hostanox 03 is Bis-(3,3-bis-(4'-hydoxy-3'-tert. butylphenyl)butanic acid)-glycolester (CAS-no. 32509-66-3).

Irganox 1330 is 1,3,5-Trimethyl-2,4,6-tris-(3,5-di-tert. butyl-4-hydroxyphenyl) benzene (CAS-no. 1709-70-2).

Hostavin N30 is a polymer of 2,2,4,4-tetramethyl-7-oxa-3,20-diazadispiro-20-(2,3-epoxi-propyl)dispiro-(5.1.11.2)-heneicosane-21-one and epichlorohydrine (CAS-no. 202483-55-4).

Example 1 is according to the invention, Examples 2, 3 and 4 are comparative examples.

**Table 1:**

| | Example 1 | Example 2 | Example 3 | Example 4 |
|---|---|---|---|---|
| base resin | 93.95 | 93.88 | 93.95 | 93.85 |
| Calcium stearate | 0.15 | 0.15 | 0.15 | 0.15 |
| Carbon black MB | 5.75 | 5.75 | 5.75 | 5.75 |
| Irganox 168 | | 1100 | | |
| Doverphos S-9228 | 500 | | 500 | 500 |
| Irganox 1010 | | 1100 | | |
| Hostanox 03 | | | 1000 | 1000 |
| Irganox 1330 | 1000 | | | |
| Hostavin N30 | | | | 1000 |

Pipes 12 x 2 mm (outer diameter x wall thickness) were prepared by extrusion in a Battenfeld 45-25B extruder, which gave an output of 14 kg/h at a screw speed of 16 rpm. The extruder melt temperature was 212 °C.

The hoop stress and the performance of the pipes according to the examples are shown in Table 2. The last column shows the failure time in view of a reference, which is Example 2.

**Table 2:**

| | Hoop stress /MPa | Failure time /h | Failure time vs. reference |
|---|---|---|---|
| Example 1 | 1.66 | 2695 | 2.4 |
| Example 2 | 1.70 | 1119 | 1.0 |
| Example 3 | 1.67 | 742 | 0.7 |
| Example 4 | 1.66 | 1152 | 1.0 |

The result of the examples shows that the performance of Example 1 is much better than that of Examples 2, 3 or 4.

## Claims

1. Use of compound (A) and compound (B) in a polyolefin composition for increasing the lifetime of a pipe made of said polyolefin composition which pipe is in permanent contact with chlorinated water, wherein compound (A) has the following formula (I): 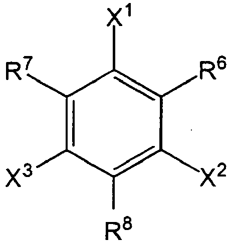 wherein
- R⁶, R⁷ and R⁸ independently are non-substituted or substituted aliphatic or aromatic hydrocarbyl radicals which may comprise OH-groups,
- X¹, X², and X³ independently are H or OH, with the proviso that at least one of X¹, X² and X³ is OH, and
- the entire molecule does not comprise an ester group,
wherein compound (B) has the following formula (II): 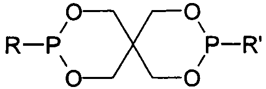 wherein R and R' each is the same or different residue and comprising at least 6 carbon atoms.

2. Use according to claim 1, wherein the polyolefin composition comprises a polyethylene homo- or copolymer.

3. Use according to claim 2, wherein the base resin of said polyolefin composition consists of a polyethylene homo- or copolymer.

4. Use according to any one of the preceding claims, wherein the concentration of compound (A) in the polyolefin composition is between 100 and 5000 ppm.

5. Use according to any one of the preceding claims, wherein the concentration of compound (B) in the polyolefin composition is between 200 and 1000 ppm.

6. Use according to any one of the preceding claims, wherein the sum of concentration of compounds (A) and (B) is between 1000 and 2500 ppm.

7. Use according to any one of the preceding claims, wherein the composition comprises only one compound of formula (I).

8. Use according to any one of the preceding claims, wherein the composition comprises only one compound of formula (II).

9. Use according to any one of the preceding claims, wherein the increased lifetime of the pipe is shown by a failure time in a hoop stress test according to ASTM F 2263 of at least 2000 hours.

10. Use according to claim 9, wherein the failure time is at least 2500 hours.

## Patentansprüche

1. Verwendung einer Verbindung (A) und einer Verbindung (B) in einer Polyolefinzusammensetzung zur Verlängerung der Lebensdauer von einem Rohr, das aus der Polyolefinzusammensetzung hergestellt ist, wobei das Rohr in permanentem Kontakt mit chloriertem Wasser ist, wobei die Verbindung (A) die folgende Formel (I) hat: 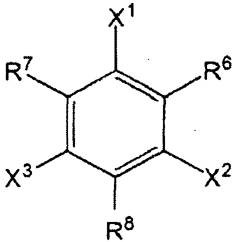 wobei
- R⁶, R⁷ und R⁸ unabhängig unsubstituierte oder substituierte aliphatische oder aromatische Kohlenwasserstoffradikale sind, die OH-Gruppen umfassen können,
- X¹, X² und X³ unabhängig H oder OH sind, unter der Voraussetzung, dass mindestens einer von X¹, X² und X³ OH ist, und
- das gesamte Molekül keine Estergruppe umfasst,
wobei die Verbindung (B) die folgende Formel (II) hat: 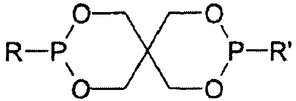 wobei R und R' jeweils ein gleicher oder unterschiedlicher Rest sind und mindestens 6 Kohlenstoffatome umfassen.

2. Verwendung nach Anspruch 1, wobei die Polyolefinzusammensetzung ein Polyethylenhomo- oder copolymer umfasst.

3. Verwendung nach Anspruch 2, wobei das Basisharz der Polyolefinzusammensetzung aus einem Polyethylenhomo- oder copolymer besteht.

4. Verwendung nach einem der vorhergehenden Ansprüche, wobei die Konzentration der Verbindung (A) in der Polyolefinzusammensetzung zwischen 100 und 5000 ppm beträgt.

5. Verwendung nach einem der vorhergehenden Ansprüche, wobei die Konzentration der Verbindung (B) in der Polyolefinzusammensetzung zwischen 200 und 1000 ppm beträgt.

6. Verwendung nach einem der vorhergehenden Ansprüche, wobei die Summe der Konzentrationen von den Verbindungen (A) und (B) zwischen 1000 und 2500 ppm beträgt.

7. Verbindung nach einem der vorhergehenden Ansprüche, wobei die Zusammensetzung nur eine Verbindung mit der Formel (I) umfasst.

8. Zusammensetzung nach einem der vorhergehenden Ansprüche, wobei die Zusammensetzung nur eine Verbindung mit der Formel (II) umfasst.

9. Verwendung nach einem der vorhergehenden Ansprüche, wobei die verlängerte Lebensdauer des Rohrs durch eine Ausfallzeit in einem Umfangsspannungstest gemäß ASTM F 2263 von mindestens 2000 Stunden gezeigt ist.

10. Verwendung nach Anspruch 9, wobei die Ausfallzeit mindestens 2500 Stunden beträgt.

## Revendications

1. Utilisation d'un composé (A) et d'un composé (B) dans une composition polyoléfinique pour l'augmentation de la durée de vie d'une conduite se composant de ladite composition polyoléfinique, laquelle conduite est en contact permanent avec de l'eau chlorée, dans laquelle le composé (A) répond à la formule (I) suivante : 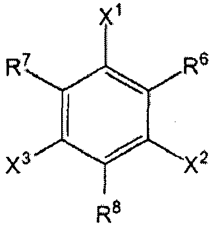 dans laquelle
- R⁶, R⁷ et R⁸ sont indépendamment des radicaux hydrocarbyle aliphatiques ou aromatiques non substitués ou substitués qui peuvent comprendre des groupes OH,
- X¹, X² et X³ sont indépendamment H ou OH, à condition qu'au moins un de X¹, X² et X³ soit OH, et
- l'entière molécule ne comprend pas de groupe ester,
dans laquelle le composé (B) répond à la formule (II) suivante : 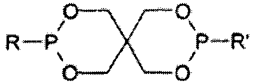 dans laquelle R et R' sont chacun le même résidu ou un résidu différent et comprenant au moins 6 atomes de carbone.

2. Utilisation selon la revendication 1, dans laquelle la composition polyoléfinique comprend un homo- ou copolymère de polyéthylène.

3. Utilisation selon la revendication 2, dans laquelle la résine de base de ladite composition polyoléfinique se compose d'un homo- ou copolymère de polyéthylène.

4. Utilisation selon l'une quelconque des revendications précédentes, dans laquelle la concentration en composé (A) dans la composition polyoléfinique est comprise entre 100 et 5000 ppm.

5. Utilisation selon l'une quelconque des revendications précédentes, dans laquelle la concentration en composé (B) dans la composition polyoléfinique est comprise entre 200 et 1000 ppm.

6. Utilisation selon l'une quelconque des revendications précédentes, dans laquelle la somme des concentrations en composés (A) et (B) est comprise entre 1000 et 2500 ppm.

7. Utilisation selon l'une quelconque des revendications précédentes, dans laquelle la composition comprend uniquement un composé de formule (I).

8. Utilisation selon l'une quelconque des revendications précédentes, dans laquelle la composition comprend uniquement un composé de formule (II).

9. Utilisation selon l'une quelconque des revendications précédentes, dans laquelle la durée de vie accrue de la conduite est illustrée par un temps de défaillance dans un test de contrainte annulaire selon la norme ASTM F 2263 d'au moins 2000 heures.

10. Utilisation selon la revendication 9, dans laquelle le temps de défaillance est d'au moins 2500 heures.
